(19) Europäisches Patentamt
European Patent Office
Office européen des brevets

(11) EP 1 159 359 B1

(12) EUROPÄISCHE PATENTSCHRIFT

(45) Veröffentlichungstag und Bekanntmachung des Hinweises auf die Patenterteilung:
**17.11.2004 Patentblatt 2004/47**

(21) Anmeldenummer: **00909092.9**

(22) Anmeldetag: **21.01.2000**

(51) Int Cl.[7]: **C09D 133/06**, C09D 163/10, C09D 175/16, C09D 167/06, C09D 5/03

(86) Internationale Anmeldenummer:
**PCT/EP2000/000439**

(87) Internationale Veröffentlichungsnummer:
**WO 2000/044837 (03.08.2000 Gazette 2000/31)**

# (54) BINDEMITTELGEMISCHE UND IHRE VERWENDUNG IN MIT AKTINISCHER STRAHLUNG UND/ODER THERMISCH HÄRTBAREN BESCHICHTUNGSSTOFFEN

BINDING AGENT MIXTURES AND THEIR USE IN COATING MATERIALS CURED BY ACTINIC RADIATION AND/OR HEAT

MELANGES DE LIANTS ET LEUR UTILISATION DANS DES MATERIAUX DE REVETEMENT, DURCISSABLES PAR RAYONNEMENT ACTINIQUE ET/OU THERMODURCISSABLES

(84) Benannte Vertragsstaaten:
**AT BE CH CY DE DK ES FI FR GB GR IE IT LI LU MC NL PT SE**

(30) Priorität: **30.01.1999 DE 19903725**

(43) Veröffentlichungstag der Anmeldung:
**05.12.2001 Patentblatt 2001/49**

(73) Patentinhaber: **BASF Coatings AG**
**48165 Münster (DE)**

(72) Erfinder:
- **BLUM, Rainer**
**D-67069 Ludwigshafen (DE)**
- **PRIETO, Jorge**
**D-48308 Senden (DE)**

(74) Vertreter: **Fitzner, Uwe, Dr. et al**
**Dres. Fitzner & Münch**
**Rechts- und Patentanwälte**
**Lintorfer Strasse 10**
**40878 Ratingen (DE)**

(56) Entgegenhaltungen:
**DE-A- 19 600 136** **DE-A- 19 600 152**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 159 359 B1

## Beschreibung

Die vorliegende Erfindungen betrifft neue Bindemittelgemische und ihre Verwendung in Beschichtungsstoffen oder als Beschichtungsstoffe, welche mit aktinischer Strahlung und/oder thermisch härtbar sind. Außerdem betrifft die vorliegende Erfindung die neuen Beschichtungsstoffe, welche die neuen Bindemittelgemische enthalten oder hieraus bestehen, und deren Verwendung für die Automobilerstlackierung, die Autoreparaturlackierung, die industrielle Lakkierung, inklusive Coil Coating und Container Coating, die Kunststofflackierung und die Möbellackierung. Des weiteren betrifft die Erfindung ein neues Verfahren zur Beschichtung von Substraten, bei dem die neuen Beschichtungsstoffe verwendet werden, sowie die entsprechend beschichteten Substrate.

Mit aktinischer Strahlung, insbesondere mit UV-Strahlung, härtbare Beschichtungsstoffe in flüssiger Form oder in Form von Pulverlacken gewinnen aus Gründen der Lösemitteleinsparung immer mehr an Bedeutung und werden immer mehr neuen Anwendungszwecken zugeführt. Ein Hauptproblem bei den bekannten mit UV-Strahlung härtbaren Beschichtungsstoffen ist aber die Inhibierung der Härtung an ihrer Oberfläche durch Luftsauerstoff. Dieser Inhibierung muß durch UV-Lampen mit hoher Energiedichte und eine Beschleunigung der Härtung durch Amincoinitiatoren kompensiert werden. Diese Amine führen indes häufig zu Geruchsbelästigungen und können eine unerwünschte Verfärbung der Beschichtungen bewirken.

Bei UV-Pulverlacken ergeben sich zusätzlich weitere Probleme aus den widersprüchlichen Forderungen nach guter Blockfestigkeit der Pulver bei der Lagerung und gutem Verlauf des geschmolzenen Lackfilms. Für gute Blockfestigkeit sollten Glasübegangstemperatur und Schmelzpunkt möglichst hoch sein, für guten Verlauf und die Anwendung auf thermosensiblen Substraten aber möglichst niedrig, um eine Härtungsreaktion vor der Ausbildung einer optimalen Oberflächenglätte und eine Schädigung des Substrats zu vermeiden. Zur Verbesserung der Oberflächenglätte sollte die Schmelze außerdem auch noch eine niedrige Viskosität aufweisen, und die Reaktion sollte erst nach einer Verzögerung einsetzen. Dieses Eigenschaftsprofil läßt sich jedoch mit rein thermisch härtbaren Pulverlacken, deren Härtung bekanntermaßen auf einer thermisch aktivierten Reaktionen zwischen Bindemittel und Vernetzungsmittel, z.B. zwischen einem Polyepoxydharz und einer Dicarbonsäure, beruhen, nur schwer verwirklichen, weil gleichzeitig mit dem Schmelzvorgang schon eine viskositätserhöhende Vernetzungsreaktion einsetzt. Bei mit aktinischer Strahlung härtbaren Pulverlacken hingegen sollte eine Trennung von Aufschmelzvorgang und Vernetzung oder Härtung möglich sein.

Bisher bekannte mit aktinischer Strahlung härtbare Pulverlacke, welche diese Erfordernisse erfüllen sollen, basieren auf Polymeren mit leicht polymerisierbaren, in der Regel acrylischen oder vinylischen, Doppelbindungen.

In den Patentschriften US-A-4,129,488 und US-A-4,163,810 werden UV-härtbare Pulverlacke mit speziellen räumlichen Anordnungen von olefinisch ungesättigten Polymeren beschrieben. Hierbei besteht das Bindemittel aus einem Epoxid-Polyester-Polymer, bei denen das Epoxid-Addukt in der Weise räumlich angeordnet wird, daß es mittels einer linearen Polymerkette in räumlicher Entfernung von dem Polyester-Addukt angeordnet ist. Das Polymer enthält zusätzlich einen chemisch gebundenen Photoinitiator.

In den europäischen Patentschriften EP-A-0 650 978, EP-A-0 650 979 und EP-A-0 650 985 werden Copolymerisate beschrieben, deren wesentlicher Bestandteil ein verhältnismäßig hoher Anteil an Methacrylatmonomeren ist. Die Copolymerisate können als Bindemittel für UV-härtbare Pulverlacke verwendet werden und zeichnen sich durch eine relativ enge Molekulargewichtsverteilung aus.

Aus der europäischen Patentschrift EP-A-0 410 242 sind Bindemittel für UV-härtbare Pulverlacke bekannt, welche aus Polyurethanen bestehen, die bestimmte (Meth)Acryloylgruppen aufweisen. Diese Polyurethane können ohne Vernetzungsmittel oder Peroxide vernetzt werden und sind daher lagerstabil. Für die Vernetzung mittels UV-Strahlung sind indes Photoinitiatoren erforderlich. Die Polyurethane können auch im Gemisch mit festen ungesättigten Polyestern verwendet werden.

Des weiteren sind aus der europäischen Patentschriften EP-A-0 636 6691 UV-härtbare Pulverlacke bekannt, welche ein Gemisch aus ungesättigten Polymeren (Bindemittel) und ungesättigten Vernetzungsmitteln enthalten. Als Bindemittel werden insbesondere ungesättigte Polyester und ungesättigte Polyacrylate, welche Cyclopentadien enthalten können, und als Vernetzungsmittel Polyurethane, welche Vinylether-, Vinylester- oder (Meth)Acryloylgruppen aufweisen, genannt.

Diese bekannten mit UV-Strahlung härtbaren Pulverlacke weisen Probleme auf, die sich sich aus der thermischen Empfindlichkeit der hierin verwendeten polymerisierbaren Doppelbindungen ergeben. Diese thermische Empfindlichkeit führt dazu, daß durch die Herstellung, die in der Regel in einem Lösemittel erfolgt, durch die Entfernung des Lösemittels und durch die in wiederholten Schmelzeprozessen durchzuführende Pulverlackkonfektionierung ein Verlust an Reaktivität und eine partielle Vernetzung resultiert.

Besonders die Entfernung des Lösemittels ist kritisch, weil zum einen schon geringe Anteile an Restlösemittel die Blockfestigkeit der Pulver erheblich beeinträchtigen, energische thermische Trocknungsverfahren andererseits aber häufig zu einer thermischen Vorvernetzung der Doppelbindungen führen. So wird z.B. in der europäischen Patentschrift EP-A-0 585 742 vorgeschlagen, ein acrylisch ungesättigtes Polyurethan, das in einem Lösemittel aufgebaut wird, stark mit Aceton zu verdünnen, dann mit viel Wasser auszufällen und bei Raumtemperatur zu trocknen, was

indes ein unverhältnismäßig aufwendiges Verfahren darstellt, das überdies einen hohen Anteil an Abfallprodukten liefert.

Weiterhin weisen die bekannten ungesättigten Bindemittel eine merkliche Vernetzungsaktivität schon im festen Zustand, z.B. als konfektionierte UV-Pulverlacke, unter Raumlicht auf, weshalb sie nur unter gefiltertem Licht gehandhabt werden können.

Aufgabe der vorliegenden Erfindung ist es, bei Schmelzetemperatur niedrigviskose, stabile Beschichtungsstoffe, insbesondere Pulverlacke, zur Verfügung zu stellen, die trotzdem eine hohe Reaktivität bei Einwirkung aktinischer Strahlung, insbesondere UV-Licht, aufweisen. Die Beschichtungsstoffe, insbesondere die Pulverlacke, sollen des weiteren in üblichen Lackschichtdicken und an der Luft eine gute Vernetzungsstabilität bei Schmelzetemperatur aufweisen, die zur Ausbildung eines guten Verlaufs führt. Außerdem sollen sie eine hohe Reaktivität bei Einwirkung aktinischer Strahlung, insbesondere UV-Licht, im Bereich der Schmelztemperatur aufweisen, was für eine kombinierte Härtung durch Wärme und aktinischer Strahlung, insbesondere UV-Licht, notwendig ist. Nicht zuletzt sollen sie eine geringe Lichtempfindlichkeit im nicht geschmolzenen Zustand haben, damit sie ohne Vernetzungsgefahr unter üblicher Raumbeleuchtung gehandhabt werden können.

Demgemäß wurde das neue Bindemittelgemisch gefunden, enthaltend

(A) mindestens ein Polymer mit gesättigter Hauptkette, das kein Polyester ist, und
(B) mindestens einen Polyester mit einer gesättigten und/oder ungesättigten Hauptkette,

wobei

(i) eine der beiden Komponenten (A) oder (B) Struktureinheiten I und/oder II aufweist oder beide Komponenten (A) und (B) Struktureinheiten I und/oder II aufweisen,

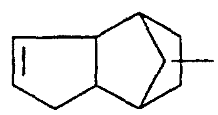

**(I)**

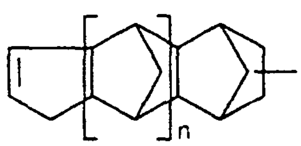

**(II), worin der Index n eine ganze Zahl von 1 bis 10 bedeutet;**

und wobei

(ii) zumindest derjenige Polyester (B), der keine Struktureinheiten I und/oder II aufweist, Malein- und/oder Fumarsäureester in seiner Hauptkette eingebaut enthält; und wobei

(iii) zumindest dasjenige polymer (A), welche keine Struktureinheit I und/oder II aufweist, kovalent gabundene Photoinitiatoren von Norrich II-Typ als Seitengruppen und/oder Endgruppen enthält.

Im folgenden wird das neue Bindemittelgemisch als "erfindungsgemäßes Bindemittelgemisch" bezeichnet.

Des weiteren wurden neue Beschichtungsstoffe, insbesondere Pulverlacke, gefunden, welche mit aktinischer Strahlung und/oder thermisch härtbar sind, welche das erfindungsgemäße Bindemittelgemisch enthalten oder hieraus bestehen.

Im folgenden werden die neuen Beschichtungsstoffe als "erfindungsgemäße Beschichtungsstoffe" oder "erfindungsgemäße Pulverlacke" bezeichnet.

Nicht zuletzt wurde ein neues Verfahren zur Beschichtung von Substraten gefunden, bei dem man die erfindungsgemäßen Beschichtungsstoffe oder Pulverlacke verwendet.

Die erfindungsgemäßen Bindemittelgernische bzw. Beschichtungsstoffe sind mit aktinischer Strahlung, vorzugsweise Elektronenstrahlen und UV-Licht, insbesondere aber UV-Licht, härtbar. Auch die Härtung zu einem B-Zustand, d.h. einem teilgehärteten Zustand, bei dem die Härtung unterbrochen ist und später wieder gestartet werden kann, ist ohne Probleme möglich.

Die erfindungsgemäßen Bindemittelgemische bzw. Beschichtungsstoffe sind als Lösungen oder Dispersionen in organischen Lösemitteln oder in Wasser wie bekannte Lacke anwendbar. Außerdem sind ausgewählte Bindemittelgemische, ggf. nach Zugabe von Peroxydstartern auch rein thermisch durch Einbrennen härtbar.

Eine spezielle und bevorzugte Anwendung finden die erfindungsgemäßen Beschichtungsstoffe als Pulverlacke. Die erfindungsgemäßen Pulverlacke zeichnen sich durch eine geringe thermische Empfindlichkeit, kurze Härtungszeiten bei kombinierter Anwendung von Wärme und UV-Licht, eine gute Blockfestigkeit bei der Lagerung und eine sehr gute Oberflächenglätte der daraus erhaltenen Beschichtungen oder Lackierungen aus.

Die erfindungsgemäße Bindemittelgemische und Beschichtungsstoffe sind im wesentlichen frei von thermisch leicht polymerisierbaren Doppelbindungen, weisen eine hohe Stabilität gegen thermische Belastung und Luftsauerstoff auf und sind dennoch bei Einwirkung von aktinischer Strahlung wie Elektronenstrahlen oder bevorzugt UV-Licht, insbesondere bei gleichzeitigem Erwärmen, überraschenderweise mit hoher Reaktivität vernetzbar. Desweiteren haben sie bei Raumtemperatur bei üblicher Raumbeleuchtung nur eine geringe Lichtempfindlichkeit, so daß sie ohne besondere Schutzmaßnahmen gehandhabt werden können.

Es ist ein weiterer besonderer Vorteil der erfindungsgemäßen Bindemittelgemische oder Beschichtungsstoffe, daß sie problemlos mit Stoffen kombiniert werden können, welche leicht polymerisierbare Doppelbindungen, insbesondere acrylische oder vinylische Doppelbindungen, aufweisen, um sie speziellen Anwendungszwecken anzupassen.

Der erste wesentliche Bestandteile des erfindungsgemäßen Bindemittelgemischs ist mindestens ein Polymer (A) mit gesättigter Hauptkette, das kein Polyester ist.

Im Rahmen der vorliegenden Erfindung ist unter einem Polymer (A) auch eine vergleichsweise niedermolekulare Verbindung oder ein Oligomer (A) zu verstehen, wenn diese ein Eigenschaftsprofil aufweisen, das ihrer Verwendung in dem erfindungsgemäßen Bindemittelgemisch nicht entgegensteht. Insbesondere müssen sie fest sein. Erfindungsgemäß sind indes Polymere (A) von Vorteil und werden deshalb bevorzugt verwendet.

Das Polymer (A) kann mindestens eine Struktureinheit I und/oder II enthalten.

Diese Struktureinheiten I und/oder II können in Form der Struktureinheit V

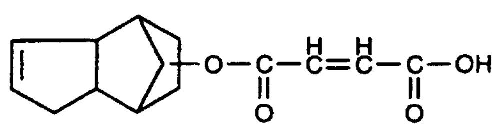

(V),

und die Struktureinheit II in Form der Struktureinheiten VI

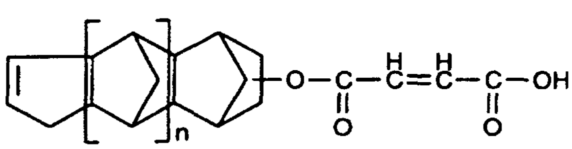

(VI), worin der Index n eine ganze Zahl von 1 bis 10 bedeutet

eingebaut sein.

Geeignete Ausgangsverbindungen für die Einführung dieser Struktureinheiten V und VI sind die Maleinsäure- und Fumarsäurehalbester von monomerem oder oligomeren Dihydrodicyclopentadienol.

Enthält das Polymer (A) keine Struktureinheit I oder II, sind hierin zwingend kovalent gebundene Photoinitiatoren vom Norrish II-Typ als Seitengruppen und/oder Endgruppen enthalten. Photoinitiatoren dieser Art sind üblich und bekannt. Ihr Wirkungsmechanismus beruht auf einer intramolekularen Variante der Wasserstoff-Abstraktionsreaktionen, wie sie in vielfältiger Weise bei photochemischen Reaktionen auftreten. Beispielhaft sei hier auf Römpp Chemie Lexikon, 9. erweiterte und neubearbeitete Auflage, Georg. Thieme Verlag Stuttgart, Bd. 4, 1991, verwiesen. Ein Beispiel für einen geeigneten erfindungsgemäß zu verwendenden Photoinitiator dieser Art ist 4-Hydroxybenzophenon. erfindungsgemäß zu verwendenden Photoinitiator dieser Art ist 4-Hydroxybenzophenon.

Im folgenden werden die kovalent gebundenen Photoinitiator-Seitengruppen und - Endgruppen vom Norrish II-Typ der Kürze halber als "Photoinitiatorgruppen II" bezeichnet.

Erfindungsgemäß sind Polymere (A), welche sowohl mindestens eine Struktureinheit I und/oder II sowie mindestens eine Photoinitiatorgruppe II enthalten, besonders vorteilhaft und werden deshalb ganz besonders bevorzugt verwendet.

Als Polymere (A) kommen insbesondere Polyacrylate, Polyurethane, Polyether und Polyepoxide in Betracht. Sie können einzeln oder als Gemisch verwendet werden. Erfindungsgemäß sind die Polyacrylate, die Polyurethane und die Polyepoxide von Vorteil und werden deshalb bevorzugt verwendet. Von diesen sind die Polyacrylate besonders vorteilhaft und werden deshalb erfindungsgemäß besonders bevorzugt verwendet.

Der Begriff "Polyurethane" umfaßt dabei auch Stoffe deren Hauptketten nicht nur über Urethanbindungen verknüpft sind, sondern auch Stoffe die Ester oder Etherkettenglieder aufweisen, d.h. die sog. Polyesterurethane und Polyetherurethane.

Die erfindungsgemäß zu verwendenden Polyurethane (A) können in bekannter Weise aus polyfunktionellen Isocyanaten und Verbindungen, welche mit Isocyanaten reaktive Gruppen enthalten, sowie aus

- Verbindungen mit mindestens einer Struktureinheit I und/oder V,
- Verbindungen mit mindestens einer Struktureinheit II und/oder VI und/oder
- Verbindungen mit mindestens einer Struktureinheit I und/oder V und mindestens einer Struktureinheit II und/oder VI, wobei diese Verbindungen jeweils mindestens eine mit Isocyanaten reaktive Gruppe enthalten,

und/oder aus

- Verbindungen, welche mindestens eine Photoinitiatorgruppe und mindestens eine mit Isocyanaten reaktive Gruppe aufweisen,

erhalten werden.

Die Struktureinheit I bzw. V kann dabei eingeführt werden durch Mitverwendung von z.B. Dihydrodicyclopentadienol oder seinem Maleinsäure- und Fumarsäurehalbester. Die Struktureinheit II bzw. VI kann in entsprechender Weise durch Mitverwendung von oligomerem Dihydrodicyclopentadienol oder seinem Maleinsäure- und Fumarsäurehalbester eingeführt werden. Die Photoinitiatorgruppe II kann beispielsweise durch Mitverwendung von 4-Hydroxybenzophenon und/oder Benzophenontetracarbon-säureverbindungen eingeführt werden. Werden dabei mit Isocyanat polyfunktionell reaktive Verbindungen mitverwendet, so werden Polymere oder Oligomere gebildet.

Die erfindungsgemäß zu verwendenden Polyepoxide (A) werden erhalten aus an sich bekannten und am Markt erhältlichen Epoxidharzen, z.B. vom Typ der Bisphenol A-Epoxidharze, durch Reaktion mit

- Verbindungen mit mindestens einer Struktureinheit I und/oder V,
- Verbindungen mit mindestens einer Struktureinheit II und/oder VI und/oder
- Verbindungen mit mindestens einer Struktureinheit I und/oder V und mindestens einer Struktureinheit II und/oder VI, wobei diese Verbindungen jeweils mindestens eine mit Epoxiden reaktive Gruppe enthalten,

und/oder aus

- Verbindungen, welche mindestens eine Photoinitiatorgruppe und mindestens eine mit Epoxiden reative Gruppe aufweisen.

Die Struktureinheit I bzw. V kann dabei eingeführt werden durch Mitverwendung von z.B. Dihydrodicyclopentadienol oder seinem Maleinsäure- und Fumarsäurehalbester. Die Struktureinheit II bzw. VI kann in entsprechender Weise durch Mitverwendung von oligomerem Dihydrodicyclopentadienol oder seinem Maleinsäure- und Fumarsäurehalbester eingeführt werden. Die Photoinitiatorgruppe II kann beispielsweise durch Mitverwendung von 4-Hydroxybenzophenon oder Benzophenontetracarbonsäure, Benzophenontetracarbonsäureanhydride, Benzophenontetracarbonsäureester und Benzophenontetracarbonsäureamid eingeführt werden. Werden dabei mit Epoxyd polyfunktionell reaktive Stoffe oder polymere Epoxydharze mitverwendet, so werden Polymere oder Oligomere gebildet.

Die erfindungsgemäß zu verwendenden Polyacrylate (A) sind vorzugsweise copolymere Poly(meth)acrylate, welche mindestens ein (Meth)Acrylat-, ein Ethacrylat- und/oder ein Cinnamatmonomer, insbesondere aber ein (Meth) Acrylatmonomer, das mindestens eine Struktureinheit I und/oder V und/oder II und/oder VI aufweist, und/oder die Maleinsäure- und Fumarsäurehalbester von monomerem und oligomerem Dihydrodicyclopentadienol; weitere (Meth) Acrylsäureester; sowie gegebenenfalls weitere hiermit copolymerisierbare olefinisch ungesättigte Monomere einpolymerisiert enthalten. An Stelle der Struktureinheiten I, V, II und/oder VI oder zusätzlich zu diesen können die Polyacrylate (A) mindestens eine Photoinitiatorgruppe II enthalten. Als (Meth)Acrylatmonomer, das mindestens eine Struktureinheit I und/oder V und/oder II und/oder VI aufweist, wird erfindungsgemäß Dihydrodicyclopentadienylacrylat besonders bevorzugt verwendet.

Die Photoinitiatorgruppe II kann eingeführt werden über mit (Meth)Acrylaten copolymerisierbare, ethylenisch ungesättigte, vor und/oder nach der Polymerisation im triplet-angeregten Zustand zur Wasserstoffabstraktion befähigte, aromatische oder teilaromatische Verbindungen wie copolymerisierbare Abkömmlinge des Benzophenons und Stoffe, wie sie in dem Patentschriften EP-A-0 486 897, DE-A-38 20 463 und DE-A-40 07 318 beschrieben sind. Hierbei handelt es sich um Verbindungen, welche sich von aromatischen oder teilaromatischen Ketonen ableiten oder welche Thioxanthonstrukturen aufweisen.

Die Photoinitiatorgruppe II kann desweiteren eingeführt werden über die polymeranaloge Umsetzung von Epoxid-Seitengruppen, wie sie durch Einpolymerisieren von Glycidylmethacrylat erhalten werden, mit geeigneten Photoinitiatoren wie 4-Hydroxybenzophenon.

Die Photoinitiatoren II sind in den erfindungsgemäß zu verwendenden Polyacrylate (A) vorteilhafterweise in Mengen von 5 bis 80, vorzugsweise 5 bis 30 Gew.-%, jeweils bezogen auf das Polyacrylat (A), enthalten. Ihr Anteil wird aus Kostengründen so niedrig wie möglich gehalten. Sie beeinflussen stark die Lichtempfindlichkeit der erfindungsgemäßen Bindemittelgemische. Der Anteil, der für den jeweiligen Verwendungszweck optimal ist, kann deshalb vom Fachmann anhand einfacher Vorversuche ermittelt werden.

Eine bevorzugte Methode zur Herstellung dieser Polyacrylate (A) ist die lösernittelfreie, radikalische Substanzpolymerisation im gerührten Reaktor gegebenenfalls unter Druck oder besonders bevorzugt in kontinuierlichen Durchlaufreaktoren, bei Temperaturen oberhalb der Schmelztemperatur der gebildeten Polymeren, bevorzugt oberhalb 140°C. Bei dieser Methode erhält man Polyacrylate (A) mit niedrigem Molekulargewicht und enger Molekulargewichtsverteilung, was bei Pulverlacken wegen des daraus resultierenden engeren Schmelzbereiches und der niedrigeren Schmelzviskosität sehr erwünscht ist. Weiter entfällt bei der Substanzpolymerisation die Entfernung eines Hilfslösemittels und es ist möglich Pigmente und Lackhilfsmittel direkt in die Schmelze einzuarbeiten, wobei die sehr gute Thermostabilität der erfindungsgemäß zu verwendenden Polyacrylate (A) vorteilhaft ist.

Ebenfalls erfindungsgemäß sind aber auch im Lösemittel, oder nach der genannten lösemittelfreien Technologie hergestellte, acrylisch ungesättigte Polyacrylate (A), die z.B. durch Reaktion von (Meth)Acrylsäure mit copolymerisiertem Glycidyl(meth)acrylat erhältlich sind, wobei allerdings die größere Thermoempfindlichkeit bei der Aufarbeitung und der Pulverkonfektionierung beachtet werden muß.

Beispiele geeigneter (Co)Polymerisationsverfahren für die Herstellung der Acrylatcopolymerisat (A1) werden in den Patentschriften DE-A-197 09 465, DE-C-197 09 476, DE-A-28 48 906, DE-A-195 24 182, EP-A-0 554 783, WO 95/27742 oder WO 82/02387 beschrieben.

Vorteilhaft sind Taylorreaktoren.

Taylorreaktoren, die der Umwandlung von Stoffen unter den Bedingungen der Taylorströmung dienen, sind bekannt. Sie bestehen in wesentlichen aus zwei koaxialen konzentrisch angeordneten Zylindern, von denen der äußere feststehend ist und der innere rotiert. Als Reaktionsraum dient das Volumen, das durch den Spalt der Zylinder gebildet wird. Mit zunehmender Winkelgeschwindigkeit $\omega_i$ des Innenzylinders treten einer Reihe unterschiedlicher Strömungsformen auf, die durch eine dimensionslose Kennzahl, die sogenannte Taylor-Zahl Ta, charakterisiert sind. Die Taylor-Zahl ist zusätzlich zur Winkelgeschwindigkeit des Rührers auch noch abhängig von der kinematischen Viskosität v des Fluids im Spalt und von den geometrischen Parametern, dem äußeren Radius des Innenzylinders $r_i$, dem inneren Radius des Außenzylinders $r_a$ und der Spaltbreite d, der Differenz beider Radien, gemäß der folgenden Formel:

$$Ta = \omega_i r_i d\, v^{-1} (d/\, r_i)^{1/2} \qquad (I)$$

mit

$$d = r_a - r_i.$$

Bei niedriger Winkelgeschwindigkeit bildet sich die laminare Couette-Strömung, eine einfache Scherströmung, aus. Wird die Rotationsgeschwindigkeit des Innenzylinders weiter erhöht, treten oberhalb eines kritischen Werts abwechselnd entgegengesetzt rotierende (kontrarotierende) Wirbel mit Achsen längs der Umfangsrichtung auf. Diese sogenannten Taylor-Wirbel sind rotationssymmetrisch und haben einen Durchmesser, der annähernd so groß ist wie die Spaltbreite. Zwei benachbarte Wirbel bilden ein Wirbelpaar oder eine Wirbelzelle.

Dieses Verhalten beruht darauf, daß bei der Rotation des Innenzylinders mit ruhendem Außenzylinder die Fluidpartikel nahe des Innenzylinders einer stärkeren Zentrifugalkraft ausgesetzt sind als diejenigen, die weiter vom inneren Zylinder entfernt sind. Dieser Unterschied der wirkenden Zentrifugalkräfte drängt die Fluidpartikel vom Innen- zum Außenzylinder. Der Zentrifugalkraft wirkt die Viskositätskraft entgegen, da bei der Bewegung der Fluidpartikel die Reibung überwunden werden muß. Nimmt die Rotationsgeschwindigkeit zu, dann nimmt auch die Zentrifugalkraft zu. Die Taylor-Wirbel entstehen, wenn die Zentrifugalkraft größer als die stabilisierende Viskositätskraft wird.

Bei der Taylor-Strömung mit einem geringen axialen Strom wandert jedes Wirbelpaar durch den Spalt, wobei nur ein geringer Stoffaustausch zwischen benachbarten Wirbelpaaren auftritt. Die Vermischung innerhalb solcher Wirbelpaare ist sehr hoch, wogegen die axiale Vermischung über die Paargrenzen hinaus nur sehr gering ist. Ein Wirbelpaar kann daher als gut durchmischter Rührkessel betrachtet werden. Das Strömungssystem verhält sich somit wie ein ideales Strömungsrohr, indem die Wirbelpaare mit konstanter Verweilzeit wie ideale Rührkessel durch den Spalt wandern.

Erfindungsgemäß von Vorteil sind hierbei Taylorreaktoren mit einer äußeren Reaktorwand und einem hierin befindlichen konzentrisch oder exzentrisch angeordneten Rotor, einem Reaktorboden und einem Reaktordeckel, welche zusammen das ringspaltförmige Reaktorvolumen definieren, mindestens einer Vorrichtung zur Zudosierung von Edukten sowie einer Vorrichtung für den Produktablauf, wobei die Reaktorwand und/oder der Rotor geometrisch derart gestaltet ist oder sind, daß auf im wesentlichen der gesamten Reaktorlänge im Reaktorvolumen die Bedingungen für die Taylorströmung erfüllt sind, d.h., daß sich der Ringspalt in Durchflußrichtung verbreitert.

Die Auswahl der zu kombinierenden Monomeren erfolgt nach den Ansprüchen der vorgesehenen Verwendung, so daß die durch aktinische Strahlung, insbesondere UV-Licht, ausgehärteten Beschichtungsstoffe den gestellten Anforderungen genügen. Die Grundprinzipien bei der Auswahl und Mischung von Monomeren zur Einstellung von Basiseigenschaften bei Beschichtungsstoffen und den hiermit hergestellten Beschichtungen, insbesondere Lacke, sind dem Polymerchemiker und Lackfachmann bekannt.

Diese Anforderungen können recht unterschiedlich sein, z.B. werden für klare Decklacke von Metallic-Lackierungen bei Automobilen höchste Vergilbungsund Witterungsbeständigkeit, Kratzfestigkeit und Glanzhaltung bei hoher Härte gefordert. Bei einem Coil Coating-Lack, d.h. einem Lack mit dem Blechbahnen lackiert, dann aufgewickelt und später unter Verformung weiterverarbeitet werden, kommt es auf höchste Elastizität und Haftung an.

Auch der Preis der Monomeren kann ein Auswahlkriterium sein, wenn für bestimmte Anwendungen zwar keine hohe Qualität der Lackierungen, dafür aber ein niedriger Preis gefordert wird.

So kann z.B. die Härte, die Glasübergangstemperatur und die Erweichungstemperatur der Polyacrylate (A) erhöht werden durch höhere Anteile an "harten" Monomeren, wie z.B. Styrol oder den (Meth)Acrylaten von Cl- bis C3-Alkoholen, während z.B. Butylacrylat, Ethylhexylacrylat oder Tridecylacrylat als "weiche" Monomere diese Temperaturen erniedrigen, dafür aber die Elastizität verbessern. Weiter ist auch bekannt, daß untergeordnete Anteile an einpolymerisierter (Meth)Acrylsäure oder einpolymerisiertem (Meth)Acrylamid die Haftung verbessern.

Auch die Einflüsse des Molekulargewichtes und der Molekulargewichtsverteilung, die Steuerung der Polymerisation durch Regler, Temperaturführung und Katalysatorauswahl sind dem Fachmann bekannter Stand der Technik.

Beispiele geeigneter Monomere zum Aufbau von Polyacrylaten (A) sind die Ester der Acrylsäure und Methacrylsäure mit aliphatischen, cykloaliphatischen, araliphatischen und aromatischen Alkoholen mit 1 bis 40 Kohlenstoffatomen wie Methyl(meth)acrylat, Ethyl(meth)acrylat, Propyl(meth-)acrylat, Isopropyl(meth)acrylat, n-Butyl(meth) acrylat, Isobutyl(meth)acrylat, tert.-Butyl(meth)acrylat, Amyl(meth)acrylat, Isoamyl(meth)acrylat, Hexyl(meth)acrylat, 2-Ethylhexyl(meth)acrylat, Decyl(meth)acrylat, Undecyl(meth)acrylat, Dodecyl(meth)acrylat, Tridecyl(meth)acrylat, Cyclohexyl(meth)acrylat, Methylcyclohexyl(meth)acrylat, Benzyl(meth)acrylat, Tetrahydrofurfuryl(meth)acrylat oder Furfuryl(meth)acrylat; die Ester der 3-Phenylacrylsäure und deren verschiedenen Isomerieformen, z.B. Methylcinnamat, Ethylcinnamat, Butylcinnamat, Benzylcinnamat, Cyclohexylcinnamat, Isoamylcinnamat, Tetrahydrofurfurylcinnamat oder Furfurylcinnamat; Acrylamid, Methacrylamid, Methylolacrylamid oder Methylolmethacrylamid; Acrylsäure, Methacrylsäure oder 3-Phenylacrylsäure; Hydroxyalkyl(meth)acrylate wie Ethylglykolmono(meth)acrylat, Butylglykolmono(meth)acrylat oder Hexandiolmono(meth)acrylat; Glycolether(meth)acrylate wie Methoxyethylglykolmono(meth) acrylat, Ethyloxyethylglykolmono(meth)acrylat, Butyloxyethylglykolmono(meth)acrylat oder Phenyloxyethylglykolmono(meth)acrylat; Glycidylacrylat oder Glycidylmethacrylat; oder Amino(meth)acrylate wie 2-Aminoethyl(meth)acrylat.

Als weitere Comonomere kommen radikalisch copolymerisierbare Monomere wie Styrol, 1-Methylstyrol, 4-tert.Butylstyrol oder 2-Chlorstyrol; Vinylester von Fettsäuren mit 2 bis 20 Kohlenstoffatomen wie Vinylacetat oder Vinylpropionat; Vinylether von Alkanolen mit 2 bis 20 Kohlenstoffatomen, wie Vinylisobutylether; Vinylchlorid oder Vinylidenchlorid; Vinylalkylketone; Diene wie Butadien oder Isopren; sowie Ester der Malein- und Crotonsäure in Betracht. Geeignete Coonomere sind auch cyclische Vinylverbindungen wie Vinylpyridin, 2-Methyl-1-vinylimidazol, 1-Vinylimidazol, 5-Vinylpyrrolidon oder N-Vinylpyrrolidon. Auch allylisch ungesättigte Comonomere können eingesetzt werden, wie z.B. Allylalkohol, Allylalkylester, Monoallylphthalat oder Allylphthalat. Weiter kommen auch Acrolein und Methacrolein und polymerisierbare Isocyanate in Betracht.

Von besonderer Bedeutung sind die Comonomere, die besonders leicht abstrahierbare Wasserstoffatome enthalten; insbesondere Comonomere mit folgenden Gruppen: Isoalkylgruppen mit 3 bis 12 C-Atomen wie Isopropyl-, Isobutyl- oder Ethylhexylgruppen; Aminoisoalkygruppen mit 3 bis 12 C-Atomen wie Diisopropylaminoethyl- oder N-Isobutyl-isopropyl-aminoalkylgruppen; Cycloisoalkygruppen mit 5 bis 8 C-Atomen wie Methylcyklohexyl-, Isopropylcyklohexyl-, Cycloalkyl-, Furfuryl- Tetrahydrofurfuryl-, p-Menthyl-, Terpin- und Thymolgruppen. Besonders geeignet sind auch Isobomylacrylat, Isobornylmethacrylat, Isobornylethacrylat, Isobornylcinnamat, Adamantanacrylat, Adamantanmethacrylat, Adamantanethacrylat sowie Adamantancinnamat in den verschiedenen Isomerieformen. Anteile dieser Comonomere erhöhen die Lichtempfindlichkeit der Polymerisate.

Comonomere, die außer der Doppelbindung noch weitere funktionelle Gruppen tragen, können für eine zusätzliche thermisch aktivierbare Vernetzungsreaktion verwendet werden und sind dann in Anteilen von 1 bis 60 Gew.-% der Comonomermischungen vorhanden. In der Regel werden sie aber in untergeordneten Mengen eingesetzt und verbessern dann z.B. die Haftung, die elektrostatische Aufladbarkeit, das Fließverhalten der erfindungsgemäßen Beschichtungsmittel und die Oberflächenglätte der erfindungsgemäßen Beschichtungen. Abkömmlinge der 3-Phenylacrylsäure verbessern weiter als eingebaute Stabilisatoren die Witterungsbeständigkeit der erfindungsgemäßen Beschichtungen, insbesondere der Lackierungen.

Maleinsäureanhydrid ist in Anteilen mit (Meth)Acrylaten und Styrol copolymerisierbar; die entsprechenden Copolymerisate addieren Wasser und Dicyclopentadien. Diese Addukte sind ebenfalls als Polyacrylate (A) geeignet.

Weitere Polymeren (A), insbesondere Polyether, werden allgemein erhalten durch polymeranaloge Umsetzung von funktionellen Polymeren mit Verbindungen die Struktureinheiten I und/oder II und/oder Photoinitiatoren aufweisen und mit den funktionellen Gruppen der Polymeren reagieren können.

Verbindungen, welche die Struktureinheiten V und/oder VI enthalten, werden erhalten über die bekannte Addition von Dicyclopentadien (DCPD) und Wasser an Anhydride von Di- oder Tetracarbonsäuren, besonders bevorzugt Maleinsäureanhydrid. Dabei ist die Acidität der Carboxylgruppen, die nach der Addition von einem Mol DCPD pro Anhydrid der Estergruppe benachbart steht, so abgeschwächt, daß beim Versuch der weiteren Addition von DCPD in Anteilen Oligostrukturen (Struktureinheiten II) gebildet werden. Oligo-DCPD-Gemische erhält man auch durch Polycycloaddition von Cyclopentadien unter Druck bei Temperaturen zwischen 170° und 300°C. Diese können destillativ aufgearbeitet werden, bevorzugt werden sie aber direkt mit z.B. Maleinsäureanhydrid und Wasser zu Mischungen von Verbindungen, welche die Struktureinheiten V und/oder VI enthalten, umgesetzt.

Veresterung diese Carbonsäuren mit z.B. polyfunktionellen Hydroxylverbindungen, insbesondere übliche und bekannte Polyether-Polyole, führt zu Polymeren (A), insbesondere Polyethern (A), mit den Struktureinheiten I bzw. V und/oder II bzw. VI.

Die erfindungsgemäß zu verwendenden Polyester (B) sind an sich bekannte, feste, gesättigte und/oder ungesättigte Polyester die durch die bekannte Polykondensation von gesättigten und/oder ungesättigten Dicarbonsäuren und/oder deren Anhydriden, und mehrwertigen Alkoholen erhalten werden. Polyester (B) haben üblicherweise einen Schmelzpunkt von 50 bis 200°C, vorzugsweise von 70 bis 120°C, und weisen im allgemeinen eine möglichst niedrige Schmelzviskosität auf. Sie können noch freie Hydroxyl- und Säuregruppen aufweisen, mit Hydroxylzahlen von 5 - 150 und Säurezahlen von 2 bis 80 mg KOH/g.

Oft ist es auch vorteilhaft, von den Estern der Carbonsäuren auszugehen und die Polyester durch Umesterung bei höheren Temperaturen zu erzeugen, weil solche Umesterungen in einigen Fällen leichter und schneller ablaufen als die direkte Veresterung. Weiter können durch (Mit)Verwendung von mehrfachfunktionellen Aminen auch Polyester mit Amidstrukturen erhalten werden. Auch die Mitverwendung monofunktioneller Einsatzstoffe ist möglich, z.B. um das Molekulargewicht zu regulieren.

Wenn im Polymer (A) Struktureinheiten I bzw. V und/oder II bzw. VI enthalten sind; müssen diese Struktureinheiten in den Polyestern (B) nicht vorhanden sein.

Werden diese Struktureinheiten indes nicht verwendet, ist es erfindungsgemäß obligatorisch, daß die Polyester (B) Malein- und/oder Fumarsäureester in ihren Hauptketten eingebaut enthalten.

Erfindungsgemäß von Vorteil sind jedoch Polyestern (B) mit den Struktureinheiten I und/oder II.

Bevorzugt und leicht zugänglich sind die esterartigen DCPD-Addukte an Polycarbonsäuren, wodurch als Sonderfall der Struktureinheiten I und II die Struktureinheiten III und IV resultieren:

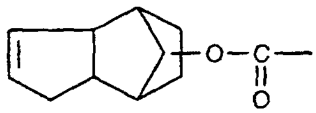

(III)

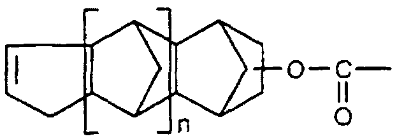

(IV), worin der Index n eine ganze Zahl von 1 bis 10 bedeutet.

Besonders leicht zugänglich sind die vorstehend beschriebenen Addukte von Maleinsäureanhydrid und Wasser an DCPD. Durch die Mitverwendung solcher Addukte werden besonders bevorzugte ungesättigte Polyester (B) erhalten.

Des weiteren ist Dihydrodicyclopentadienol VII kommerziell verfügbar und kann beim Aufbau der Polyester (B) mitverwendet werden, wodurch ebenfalls die Struktureneinheiten I und II eingeführt werden.

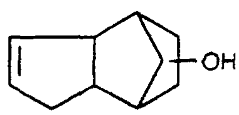

(VII)

Beispiele weiterer geeigneter Einsatzstoffe für die Herstellung der Polyester (B) sind Adipinsäure, Korksäure, Phthalsäureisomere, Tetrahydrophthalsäure, Endomethylen-tetrahydrophthalsäure, Hexahydrophthalsäure, Fumarsäure, Maleinsäure, Itaconsäure, Citraconsäure, Trimellithsäure oder Pyromellithsäure; Ethylenglykol, Polyethylenglykole, Propylenglykol, Polypropylenglykole, Butandiolisomere, Hexandiol, Neopentyl-glykol, Timethylolpropan, Glyzerin, Pentaerythrit, Bisphenol A oder hydriertes Bisphenol A; OH-polyfunktionelle Polymere wie hydroxylgruppenmodifizierte Polybutadienen oder hydroxylgruppentragende Polyurethanpräpolymere und Epoxdharze; polyfunktionelle Naturstoffe oder deren Folgeprodukte wie Leinölfettsäure, Dimer- und Polymerleinölfettsäure, Rizinusöl, Rizinusölfettsäure. Von Bedeutung sind auch alkoxylierte hydroxyfunktionelle Verbindungen wie die Ethoxylierungs- und Propoxylierungsprodukte der genannten Polyole. Weiter ist auch die Einführung von Amid- und Imidstrukturen gemäß DE-A-157 00 273 und DE-A-172 00 323 in Polyester (B) bekannter Stand der Technik.

Die Einführung der Struktureinheiten I bzw. V und/oder II bzw. VI erfolgt bevorzugt durch Mitverwendung der vorstehend beschriebenen sauren Ester bei der Polykondensation.

Weiter ist es möglich Polyester mit einem Überschuß von Säure herzustellen und diese dann mit DCPD umzusetzen. Für einen hohen Umsatz ist dabei in der Regel die Verwendung von Katalysatoren z.B. Bortrifluoritetherat notwendig. Bei höheren Temperaturen und Druck werden dabei auch Oligo-DCPD-Strukturen (Struktureinheit II) gebildet.

Enthalten die Polyester (B) bei dieser Umsetzung Doppelbindungen in der Polymerkette, z.B. als Maleinsäure- oder Fumarsäureester, so werden durch Pfropfung mit Cyclopentadien Endomethylentetrahydrophthalsäurestrukturen

VIII erzeugt.

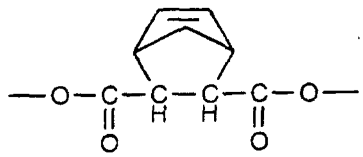

(VIII)

Von besonderer Bedeutung sind auch Polyester (B) gemäß der DE-A-43 21 533, die unter Mitverwendung von hydroxyfunktionellen Allylethern erhalten werden und eine besonders hohe Photoempfindlichkeit aufweisen. Weiter von Bedeutung sind Polyester (B) deren bei der Polykondensation frei gebliebene Carboxylgruppen mit ungesättigten Epoxydverbindungen, bevorzugt Glycidyl(meth)acrylat, umgesetzt werden; auch diese Maßnahme erhöht die Photoempfindlichkeit.

Der Einbau von Photoinitiatorgruppen II in die Polyester (B) ist möglich z.B. durch Mitverwendung von Benzophenontetracarbonsäure, Benzophenontetracarbonsäureanhydrid oder Benzophenontetracarbonsäureester oder 4-Hydroxybenzophenon bei der Polykondensation. Bevorzugt ist es hierbei, mit einem Überschuß von Hydroxylvebindungen zunächst hydroxylterminierte Polyestervorstufen herzustellen und diese mit Benzophenontetracarbonsäureanhydrid umzusetzen. Dabei werden die Benzophenonstrukturen kettenständig in die Polyester (B) eingebaut und Carboxylgruppen erzeugt. Ebenfalls bevorzugt ist es, diese Carboxylgruppen dann mit ungesättigten Epoxydverbindungen, bevorzugt Glycidyl(meth)acrylat, umzusetzen.

Der Aufbau der Polyester (B), welche speziellen Anforderungen z.B. an Härte, Elastizität, Viskosität oder Erweichungspunkt genügen, erfolgt nach den dem Fachmann bekannten Regeln durch Auswahl der Aufbaukomponenten und Einstellung des Kondensationsgrades.

Die erfindungsgemäßen Beschichtungsstoffe, insbesondere die erfindungsgemäßen Pulverlacke, werden durch Mischung der Polymeren (A) und (B) im Mengenverhältnis von 99,5 : 0,5 bis 0,5 :9 9,5 erhalten. Bevorzugt sind Mengenverhältnisse von 90 : 10 bis 50 : 50 und besonders bevorzugt von 80 : 20 bis 60: 40.

Zur Erhöhung der Lichtempfindlichkeit der erfindungsgemäßen Beschichtungsstoffe können die üblichen Photoinitiatoren (mit)verwendet werden, auch wenn Photoinitiatorgruppen II in den erfindungsgemäßen Bindemittelgemischen enthalten sind. Bevorzugt ist indes die Verwendung der Photoinitiatorgruppen II.

Weiter können die erfindungsgemäßen Beschichtungsstoffe, insbesondere die erfindungsgemäßen Pulverlacke, übliche und bekannte Lackinhaltsstoffe, wie Verlaufshilfsmittel, UV-Stabilisatoren, Entgasungshilfsmittel (z.B. Benzoin) oder Farb- und Füllstoffe enthalten. Die Herstellung der erfindungsgemäßen Beschichtungsstoffe, insbesondere der erfindungsgemäßen Pulverlacke, erfolgt nach den bekannten Technologien bevorzugt im Extruder. Dabei ist die sehr gute Thermosiabilität der erfindungsgemäßen Bindemittelgemische ein erheblicher Vorteil, weil keine Gefahr der thermischen Schädigung im Extruder besteht.

Die die erfindungsgemäßen Beschichtungsstoffe, insbesondere die erfindungsgemäßen Pulverlacke, können auf den verschiedensten Substraten mit den bekannten Applikationstechniken aufgebracht werden. Eine erhebliche Beschleunigung der Härtung mit aktinischer Strahlung, insbesondere der UV-Härtung, ist bei kombinierter Anwendung von Wärme und aktinischer Strahlung, insbesondere mit UV-Licht, möglich. So ist die Anwendung von erfindungsgemäßen UV-härtbaren Pulverlacken auf wärmeempfindlichen Substraten wie Plastik und Holz möglich; dabei wird nur die Oberfläche, bevorzugt mit IR-Strahlung soweit erwärmt, wie es zum Aufschmelzen des Pulvers erforderlich ist, dann wird UV-Licht dazu eingestrahlt. Die Härtung durch die Kombination von Wärme und UV-Strahlung erfolgt dann so rasch, daß eine Schädigung des Substrates ausgeschlossen werden kann.

Weiter ist es möglich bei der Härtung einen oder mehrere an sich bekannte thermische Härtungsmechanismen mitzuverwenden, z.B. die Covemetzung mit polyfunktionellen Isocyanaten, Aminoplastharzen wie Melamin-, Harnstoff- oder Benzoguanaminformaldehydharzen, oder polyfunktionellen Epoxyden. Die zusätzlich anwendbaren Vernetzungsmechanismen können auch zur Ausbildung sich durchdringender Netzwerke in den erfindungsgemäßen Beschichtungen führen, wodurch oft spezielle, wünschenswerte Eigenschaften, z.B. besonders hohe Chemikalienfestigkeit, erreicht werden.

Insgesamt sind die erfindungsgemäßen Bindemittelgemische und die erfindungsgemäßen Beschichtungsstoffe, insbesondere die erfindungsgemäßen Pulverlacke, hervorragend für die Automobilerstlackierung, die Autoreparaturlackierung, die industrielle Lackierung, inklusive Coil Coating und Container Coating, die Kunststofflackierung

und die Möbellackierung geeignet und liefern Substrate mit erfindungsgemäßen Beschichtungen, welche den stetig wachsenden Anforderung des Marktes genügen.

**Beispiele**

**Herstellbeispiel 1**

**Die Herstellung der Vorstufe 1 der Struktureinheit V (Monocarbonsäure V)**

In einem Rührkolben mit Heizung und Rückflußkühler wurden eingewogen:

| | |
|---|---|
| 661,10 g Dicyclopentadien<br>490,30 g Maleinsäureanhydrid | (5,0 Mol) und<br>(5,0 Mol). |

Die Mischung wurde unter einem leichten Stickstoffstrom auf 125°C erhitzt. Anschließend wurden über einen Tropftrichter während einer Stunde

| | |
|---|---|
| 95,00 g Wasser | (5,0 Mol + 5 g) |

zugegeben. Es wurde bei 125°C eine Stunde nachreagieren lassen. Es bildete sich die Monocarbonsäure V.

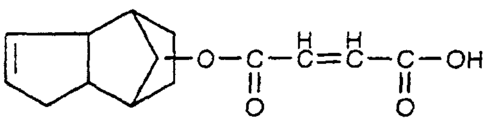

**Herstellbeispiel 2**

**Die Herstellung eines Polyesters (B1) mit Struktureinheiten II und Fumarsäureestergruppen in der Hauptkette**

In einem Rührkolben mit Heizung und Destllieraufsatz wurden eingewogen:

| | | |
|---|---|---|
| 240,00 g<br>236,00 g<br>194,00 g<br>0,67 g | Dicyclohexanolpropan<br>Hexandiol 1,6<br>Dimethylterephthalat<br>Zinnacetat. | (1 Mol),<br>(2 Mol),<br>(1 Mol) und |

Es wurde unter einem leichten Stickstoffstrom rasch auf 120°C aufgeheizt. Dann wurde während 3 Stunden die Temperatur stufenweise auf 190°C erhöht; dabei wurde das entstehende Kondensationswasser abdestilliert.

Der Kolbeninhalt wurde auf 90°C abgekühlt, und dann wurden dazugegeben:

| | | |
|---|---|---|
| 516,80 g<br>116,00 g<br>4,00 g<br>0,50 g | Vorstufe 1<br>Fumarsäure<br>Dibutylzinndilaurat und<br>Hydrochinon. | (2 Mol),<br>(1 Mol), |

Es wurde unter einem leichten Stickstoffstrom rasch auf 130°C aufgeheizt. Dann wurde während 6 Stunden die Temperatur allmählich auf 190°C erhöht; dabei wurde das entstehende Kondensationswasser abdestilliert.

Es wurde der Polyester (B1) mit einer Säurezahl von 17 erhalten, der beim Abkühlen erstarrte und nach dem Mahlen nicht verbackende Pulver ergab.

**Herstellbeispiel 3**

**Die Herstellung eines Polyesters (B2) ohne Struktureinheiten I und/oder II aber mit Fumarsäureestergruppen in der Hauptkette**

In einem Rührkolben mit Heizung und Destillieraufsatz wurden eingewogen:

| | | |
|---|---|---|
| 240,00 g | Dicyclohexanolpropan | (1 Mol), |
| 236,00 g | Hexandiol 1,6 | (2 Mol), |
| 194,00 g | Dimethylterephthalat | (1 Mol) und |
| 0,67 g | Zinnacetat. | |

Es wurde unter einem leichten Stickstoffstrom rasch auf 120°C aufgeheizt. Dann wurde während 3 Stunden die Temperatur stufenweise auf 190°C erhöht; dabei wurde das entstehende Kondensationswasser abdestilliert.

Der Kolbeninhalt wurde auf 90°C abgekühlt, und dann wurden dazugegeben:

| | | |
|---|---|---|
| 146,00 g | Adipinsäure | (2 Mol), |
| 116,00 g | Fumarsäure | (1 Mol), |
| 4,00 g | Dibutylzinndilaurat und | |
| 0,50 g | Hydrochinon. | |

Es wurde unter einem leichten Stickstoffstrom rasch auf 130°C aufgeheizt. Dann wurde in 6 Stunden die Temperatur allmählich auf 190°C erhöht, dabei wurde das entstehende Kondensationswasser abdestilliert.

Es wurde der Polyester (B2) mit einer Säurezahl von 26 erhalten, der beim Abkühlen erstarrte und nach dem Mahlen nicht verbackende Pulver ergab.

**Herstellbeispiel 4**

**Die Herstellung eines Polyacrylats (A1) mit Struktureinheiten I und Photoinitiatorgruppen II**

In einem Rührkolben mit Heizung, Rückflußkühler und Stickstoffzuführung wurden

| | |
|---|---|
| 243 g | Isopropanaol und |
| 243 g | Toluol |

eingewogen und auf Rückfluß (ca. 85°C) erwärmt; dann wurden über einen Zulauftrichter während zwei Stunden

| | |
|---|---|
| 300 g | Dihydrodicyclopentadienylacrylat, |
| 370 g | Methylmethacrylat, |
| 120 g | Glycidylmethacrylat, |
| 219 g | Butylacrylat und |
| 10 g | Mercaptoethanol |

und über einen zweiten Zulautrichter während zweieinhalb Stunden

| | |
|---|---|
| 30 g | Wako® V 59 (Firma Wako, Azostarter) und |
| 180 g | Toluol |

zugegeben. Es wurde während2 Stunden bei Rückfluß nachpolymerisiert. Die resultierende Reaktionsmischung wurde auf ca. 50°C abgekühlt. Hiernach wurden

| | |
|---|---|
| 166 g | 4-Hydroxybenzophenon und |
| 1 g | Dimethylaminopyridin |

hinzugegeben.

Der Kühler wurde dann gegen einen Destillieraufsatz ausgetauscht. Die Temperatur wurde während 8 Stunden auf 160°C gesteigert, wobei das Lösemittel abdestillierte. Danach wurde noch Vakuum angelegt und die Reaktionsmischung weitere 2 Stunden bei 160°C gehalten. Es resultierte eine Schmelze des Polyacrylats (A1), die nach Ausgießen auf eine Aluminimfolie erstarrte und nach dem Mahlen blockfeste Pulver bei 25°C ergab. Das Harz wies eine mit Hilfe der DSC-Methode gemessene Glasübergangstemperatur von 52°C und eine Schmelztemperatur von 62°C.

**Herstellbeispiel 5**

**Die Herstellung eines Polyacrylat (A2) mit Struktureinheiten I** (Vergleich)

In einem Rührkolben mit Heizung, Rückflußkühler und Stickstoffzuführung wurden

| | |
|---|---|
| 243 g | Isopropanaol und |
| 243 g | Toluol |

eingewogen und auf Rückfluß (ca. 85°C) erwärmt. Dann wurden über einen Zulauftrichter während zwei Stunden

| | |
|---|---|
| 300 g | Dihydrodicyclopentadienylacrylat, |
| 460 g | Methylmethacrylat, |
| 249 g | Butylacrylat und |
| 10 g | Mercaptoethanol |

und über einen zweiten Zulautrichter während zweieinhalb Stunden

| | |
|---|---|
| 30 g | Wako® V 59 (Firma Wako, Azostarter) und |
| 180 g | Toluol |

zugegeben. Die resultierende Reaktionsmischung wurde während 2 Stunden unter Rückfluß nachpolymerisiert.

Der Kühler wurde anschließend gegen einen Destillieraufsatz ausgetauscht, und die Temperatur wurde auf 160°C gesteigert, wobei das Lösemittel abdestillierte. Hiernach wurde noch Vakuum angelegt, und die Reaktionsmischung weitere 2 Stunden bei 160°C gehalten. Es resultierte eine Schmelze des Polyacrylats (A2), die nach Ausgießen auf eine Aluminimfolie erstarrte und nach dem Mahlen blockfeste Pulver bei 25°C ergab.
Das Harz wies eine mit Hilfe der DSC-Methode gemessene Glasübergangstemperatur von 58°C und eine Schmelztemperatur von 66°C auf.

**Beispiele 1 bis 7**

**Die Herstellung erfindungsgemäßer Pulverlacke**

In einem beheizbaren Laborkneter wurden unter Stickstoff bei 100°C durch Verkneten Bindemittelgemische hergestellt, die auf Aluminiumfolie ausgetragen und abkühlen gelassen wurden. Die Bindemittelgemische wurden dann in einer Laborschlagwerksmühle gemahlen und auf eine Korngröße von < 60µm gesiebt. Die erhaltenen Pulverlacke wurden mit einem Sieb auf gereinigte Stahlbleche in einer Menge aufgestreut, daß nach der Härtung Filmdicken von ca. 80 µm resultieren. Die Stahlbleche wurden dann auf eine temperaturgeregelte Heizplatte mit einer Temperatur von 130°C gelegt und 5 Min. getempert; dabei schmolz der Pulverbelag zu einer gut verlaufenen Schicht, die dann bei weiterem Verbleib auf der Heizplatte mit einer UV-Quarzlampe mit einem Emissionsmaximum bei ca. 365 nm und einer Energieleistung (gemessen in der Ebene der Lackfilme) von 17 mW/cm$^2$ während 2 min bestrahlt wurde. Danach wurden die Proben von der Heizplatte genommen und eine Stunde nach dem Abkühlen mit einem acetonfeuchten Wattebausch 30 Mal gerieben. Die Tabelle gibt einen Überblick über die Zusammensetzung der erfindungsgemäßen Pulverlacke und deren Lüsemittelbeständigkeit.

Tabelle:

**Die Zusammensetzung und die Lösemittelbeständigkeit der erfindungsgemäßen Pulverlacke (Beispiele 1 bis 7)**

| Beispiel Nr | Polyacrylat (A) | Polyester (B) | Photoinitiator | Acetonfestigkeit |
|---|---|---|---|---|
| 1 | A1 / 140 g | B1 / 60 g | - | 0 |
| 2 | A1 / 140 g | B2 / 60 g | - | 2 |
| 3 | A1 / 140 g | B2 / 60 g | 6 g BDMK | 0 |
| 4V* | A2/ 140 g | B1 / 60 g | - | 4 |
| 5V | A2 / 140 g | B1 / 60 g | 6 g BDMK | 2-3 |
| 6V | A2 / 140 g | B2 / 60 g | - | 4 |
| 7V | A2 / 140 g | B2 / 60 g | 6 g BDMK | 3 |

*V = Vergleich
BDMK = Benzildimethylketal
Notenwerte Acetonfestigkeit: 0 = kein Angriff bis 5 = löslich, unvernetzt)

Es zeigte sich, daß die gemeinsame Verwendung von Struktureinheiten I und Photoinitiatorgruppen II die besten Ergebnisse lieferte.

## Patentansprüche

**1.** Bindemittelgemisch, enthaltend

(A) mindestens ein Polymer mit gesättigter Hauptkette, das kein Polyester ist, und
(B) mindestens einen Polyester mit einer gesättigten und/oder ungesättigten Hauptkette,

wobei

(i) eine der beiden Komponenten (A) oder (B) Struktureinheiten I und/oder II aufweist oder beide Komponenten (A) und (B) Struktureinheiten I und/oder II aufweisen,

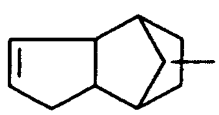

**(I)**

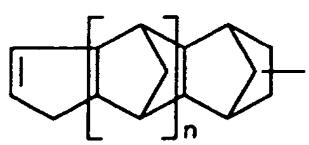

**(II)**, worin der Index n eine ganze Zahl von 1 bis 10 bedeutet; und wobei
(ii) zumindest derjenige Polyester (B), der keine Struktureinheiten I und/oder II aufweist, Malein- und/oder Fumarsäureester in seiner Hauptkette eingebaut enthält;
und wobei
(iii) zumindest dasjenige Polymer (A), welches keine Struktureinheiten I und/oder II aufweist, kovalent gebundene Photonitiatoren vom Norrish II-Typ als Seitengruppen und/oder Endgruppen enthält.

**2.** Das Bindemittelgemisch nach Anspruch 1, **dadurch gekennzeichnet, daß**

(iv) das Polymer (A) mindestens eine Struktureinheit I und/oder II sowie mindestens einen kovalent gebundene Photoinitiator vom Norrish II-Typ als Seitengruppe und/oder Endgruppe enthält.

**3.** Das Bindemittelgemisch nach einem der Ansprüch 1 oder 2, **dadurch gekennzeichnet, daß**

(v) der Polyester (B) Struktureinheiten I und/oder II aufweist und Maleinund/oder Fumarsäureestergruppen in ihrer Hauptkette eingebaut enthält.

**4.** Das Bindemittelgemisch nach einem der Ansprüche 1 bis 3, **dadurch gekennzeichnet, daß** das Polymer (A) mindestens ein Polyacrylat, ein Polyurethan, einen Polyether und/oder ein Polyepoxid darstellt.

**5.** Das Bindemittelgemisch nach Anspruch 4, **dadurch gekennzeichnet, daß** es sich bei dem Polyacrylat (A) um mindestens ein copolymeres Poly(meth)acrylat handelt, welches mindestens ein (Meth)Acrylatmonomer, welches mindestens eine Struktureinheit I und/oder 11 aufweist, weitere (Meth)Acrylsäureester sowie gegebenenfalls weitere hiermit copolymerisierbare olefinisch ungesättigte Monomere einpolymerisiert enthält.

**6.** Das Bindemittelgemisch nach Anspruch 4, **dadurch gekennzeichnet, daß** die Polyurethane (A) herstellbar sind aus

- Polyisocyanaten

und

- Verbindungen, welche mit Isocyanaten reaktiven Gruppen enthalten, sowie aus
- Verbindungen mit mindestens einer Struktureinheit I,
- Verbindungen mit mindestens einer Struktureinheit II und/oder
- Verbindungen mit mindestens einer Struktureinheit I und mindestens einer Struktureinheit II, wobei diese Verbindungen jeweils mindestens eine mit Isocyanaten reaktive Gruppe enthalten,

sowie gegebenenfalls aus

- Verbindungen, welche mindestens eine Photoinitiatorgruppe und mindestens eine mit Isocyanaten reaktive Gruppe aufweisen.

**7.** Das Bindemittelgemisch nach Anspruch 4, **dadurch gekennzeichnet, daß** die Polyepoxide (A) herstellbar sind aus

- Polyepoxiden und
- Verbindungen mit mindestens einer Struktureinheit I,
- Verbindungen mit mindestens einer Struktureinheit II und/oder.
- Verbindungen mit mindestens einer Struktureinheit I und mindestens einer Struktureinheit II, wobei diese Verbindungen jeweils mindestens eine mit Epoxiden reaktive Gruppe enthalten, sowie gegebenenfalls aus
- Verbindungen, welche mindestens eine Photoinitiatorgruppe und mindestens eine mit Epoxiden reaktive Gruppe aufweisen.

**8.** Das Bindemittelgemisch nach einem der Ansprüche 1 bis 7, **dadurch gekennzeichnet, daß** in den Polyestern (B) die Struktureinheit I in Form der Struktureinheit III

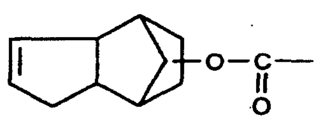

**(III)**

und die Struktureinheit II in Form der Struktureinheit IV

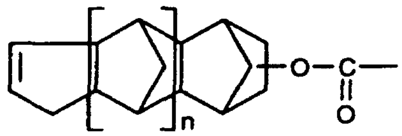

**(IV),** worin der Index n eine ganze Zahl von 1 bis 10 bedeutet; eingebaut ist.

**9.** Das Bindemittelgemisch nach einem der Ansprüche 1 bis 8, **dadurch gekennzeichnet, daß** in den Polymeren (A) und/oder den Polyestern (B) die Struktureinheit I in Form der Struktureinheit V

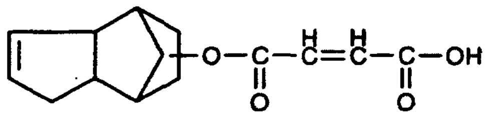

**(V),**

und die Struktureinheit 11 in Form der Struktureinheiten VI

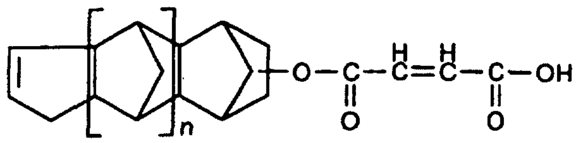

**(VI),** worin der Index n eine ganze Zahl von 1 bis 10 bedeutet; eingebaut ist.

**10.** Das Bindemittelgemisch nach einem der Ansprüche 1 bis 9, **dadurch gekennzeichnet, daß** die Komponenten (A) und (B) hierin in einem Mengenverhältnis von 99,5 : 0,5 bis 0,5 : 99,5 enthalten sind.

**11.** Verwendung des Bindemittelgemischs gemäß einem der Ansprüche 1 bis 10 für die Herstellung von mit aktinischer Strahlung und/oder thermisch härtbaren Beschichtungsstoffen oder als mit aktinischer Strahlung und/oder thermisch härtbare Beschichtungsstoffe.

**12.** Beschichtungsstoffe, welche mit aktinischer Strahlung und/oder thermisch härtbar sind und Bindemittelgemische gemäß einem der Ansprüche 1 bis 10 enthalten oder hieraus bestehen.

**13.** Verwendung der Beschichtungsstoffe gemäß Anspruch 12 für die Automobilerstlackierung, die Autoreparaturlackierung, die industrielle Lackierung, inklusive Coil Coating und Container Coating, die Kunststofflackierung und die Möbellackierung.

**14.** Verfahren zur Beschichtung von Substraten in der Automobilerstlackierung, der industriellen Lackierung, inklusive Coil Coating und Container Coating, und der Möbellackierung durch Applizieren eines Beschichtungsstoffs und Aushärten mit aktinischer Strahlung und/oder durch Erhitzen, **dadurch gekennzeichnet, daß** man hierbei einen Beschichtungsstoff gemäß Anspruch 12 verwendet.

**15.** Substrate, beschichtet mit Hilfe des Verfahrens gemäß Anspruch 14.

## Claims

**1.** Binder mixture comprising

(A) at least one polymer with a saturated main chain that is not polyester and

(B) at least one polyester having a saturated and/or unsaturated main chain,

(i) one of the two components (A) or (B) having structural units I and/or II, or both components (A) and (B) having structural units I and/or II,

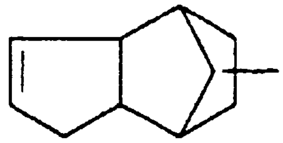

(I)

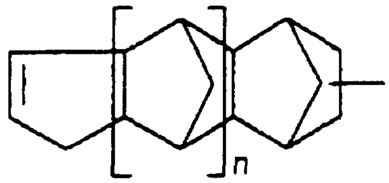

(II) in which the index n is an integer from 1 to 10;
and
(ii) at least the polyester (B) that has no structural units I and/or II containing maleic and/or fumaric esters incorporated in its main chain,
and
(iii)at least the polymer (A) that contains no structural units I and/or II comprising covalently bonded photoinitiators of the Norrish II type as side groups and/or end groups.

2. Binder mixture according to Claim 1, **characterized in that**

(iv) the polymer (A) contains at least one structural unit I and/or II and also at least one covalently bonded photoinitiator of the Norrish II type as a side group and/or end group.

3. Binder mixture according to either of Claims 1 and 2, **characterized in that**

(v) the polyester (B) contains structural units I and/or II and maleic and/or fumaric ester groups incorporated in its main chain.

4. Binder mixture according to any of Claims 1 to 3, **characterized in that** the polymer (A) is at least one polyacrylate, polyurethane, polyether and/or polyepoxide.

5. Binder mixture according to Claim 4, **characterized in that** the polyacrylate (A) comprises at least one copolymeric poly(meth)acrylate containing in copolymerized form at least one (meth)acrylate monomer containing at least one structural unit I and/or II, further (meth)acrylic esters, and, if desired, further olefinically unsaturated monomers copolymerizable therewith.

6. Binder mixture according to Claim 4, **characterized in that** the polyurethanes (A) are preparable from

- polyisocyanates
  and
- compounds containing isocyanate-reactive groups,

and from

- compounds containing at least one structural unit I,
- compounds containing at least one structural unit II and/or
- compounds containing at least one structural unit I and at least one structural unit II, these compounds each containing at least one isocyanate-reactive group,

and, if desired, from

- compounds containing at least one photoinitiator group and at least one isocyanate-reactive group.

**7.** Binder mixture according to Claim 4, **characterized in that** the polyepoxides (A) are preparable from

- polyepoxides
  and
- compounds containing at least one structural unit I,
- compounds containing at least one structural unit II and/or
- compounds containing at least one structural unit I and at least one structural unit II, these compounds each containing at least one epoxide-reactive group,

and, if desired, from

- compounds containing at least one photoinitiator group and at least one epoxide-reactive group.

**8.** Binder mixture according to any of Claims 1 to 7, **characterized in that** in the polyesters (B) the structural unit I is incorporated in the form of the structural unit III

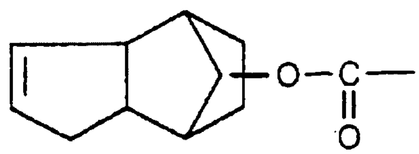

**(III)**

and the structural unit II is incorporated in the form of the structural unit IV

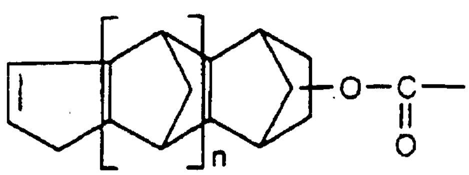

**(IV)** in which the index n is an integer from 1 to 10.

**9.** Binder mixture according to any of Claims 1 to 8, **characterized in that** in the polymers (A) and/or polyesters (B) the structural unit I is incorporated in the form of the structural unit V

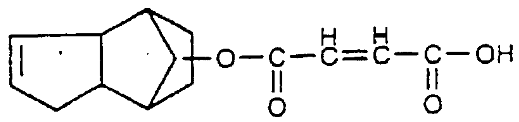

**(V)** and the structural unit II is incorporated in the form of structural units VI

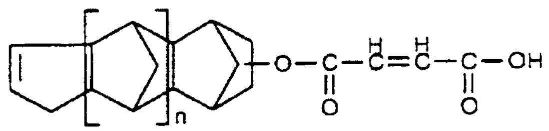

**(VI)** in which the index n is an integer from 1 to 10.

**10.** Binder mixture according to any of Claims 1 to 9, **characterized in that** it comprises components (A) and (B) in a proportion of from 99.5:0.5 to 0.5:99.5.

**11.** Use of the binder mixture according to any of Claims 1 to 10 to prepare coating materials curable thermally and/or with actinic radiation or as coating materials curable thermally and/or with actinic radiation.

**12.** Coating material which is curable thermally and/or with actinic radiation and comprises or consists of a binder mixture according to any of Claims 1 to 10.

**13.** Use of a coating material according to Claim 12 for automotive OEM finishing, automotive refinish, industrial coating, including coil coating and container coating, the coating of plastics, or furniture coating.

**14.** Method of coating substrates in automotive OEM finishing, industrial coating, including coil coating and container coating, or furniture coating by applying a coating material and curing it with actinic radiation and/or by heating, which comprises using a coating material according to Claim 12.

**15.** Substrate coated by means of the method according to Claim 14.

**Revendications**

**1.** Mélange de liants, contenant

(A) au moins un polymère avec une chaîne principale saturée, qui n'est pas un polyester, et
(B) au moins un polyester présentant une chaîne principale saturée et/ou insaturée

où

(i) un des deux composants (A) ou (B) présente des unités de structure I et/ou II ou les deux composants (A) et (B) présentent des unités de structure I et/ou II

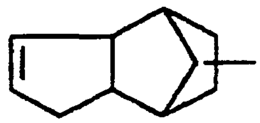

**(I)**

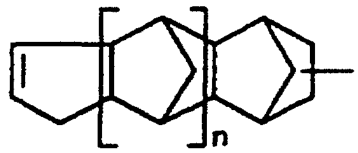

(II)

dans laquelle l'indice n signifie un nombre entier de 1 à 10 et où
(ii) au moins le polyester (B) qui ne présente pas d'unités de structure I et/ou II contient, incorporé dans sa chaîne principale, des esters de l'acide maléique et/ou fumarique ; et où
(iii) au moins le polymère (A) qui ne présente pas d'unités de structure I et/ou II contient des photo-initiateurs du type Norrish II liés par covalence comme groupements latéraux et/ou terminaux.

**2.** Mélange de liants selon la revendication 1, **caractérisé en ce que**

(iv) le polymère (A) contient au moins une unité de structure I et/ou II ainsi qu'au moins un photo-initiateur du type Norrish II lié par covalence comme groupement latéral et/ou terminal.

**3.** Mélange de liants selon l'une quelconque des revendications 1 ou 2, **caractérisé en ce que**

(v) le polyester (B) présente des unités de structure I et/ou II et contient, incorporé dans sa chaîne principale, des groupements ester de l'acide maléique et/ou fumarique.

**4.** Mélange de liants selon l'une quelconque des revendications 1 à 3, **caractérisé en ce que** le polymère (A) représente au moins une polyacrylate, un polyuréthanne, un polyéther et/ou un polyépoxyde.

**5.** Mélange de liants selon la revendication 4, **caractérisé en ce qu'**il s'agit, pour le polyacrylate, (A) d'au moins un poly(méth)acrylate copolymère, qui contient au moins un monomère (méth)acrylate, qui présente au moins une unité de structure I et/ou II, d'autres esters de l'acide (méth)acrylique ainsi que le cas échéant d'autres monomères oléfiniquement insaturés copolymérisables avec ceux-ci.

**6.** Mélange de liants selon la revendication 4, **caractérisé en ce que** les polyuréthannes (A) peuvent être préparés à partir

- de polyisocyanates
  et
- de composés qui contiennent des groupements réactifs avec des isocyanates ainsi que
- de composés comprenant au moins une unité de structure I
- de composés présentant au moins une unité de structure II et/ou
- de composés présentant au moins une unité de structure I et au moins une unité de structure II, ces composés contenant à chaque fois au moins un groupement réactif avec les isocyanates

ainsi que le cas échéant

- de composés qui présentent au moins un groupement photo-initiateur et au moins un groupement réactif avec les isocyanates.

7. Mélange de liants selon la revendication 4, **caractérisé en ce que** les polyépoxydes (A) peuvent être préparés à partir

- de polyépoxydes
  et
- de composés présentant au moins une unité de structure I,
- de composés présentant au moins une unité de structure II et/ou
- de composés présentant au moins une unité de structure I et au moins une unité de structure II, ces composés contenant à chaque fois au moins un groupement réactif avec les époxydes ainsi que le cas échéant
- de composés qui présentent au moins un groupement photo-initiateur et au moins un groupement réactif avec les époxydes.

8. Mélange de liants selon l'une quelconque des revendications 1 à 7, **caractérisé en ce que** dans les polyesters (B), l'unité de structure I est incorporée sous forme de l'unité de structure III

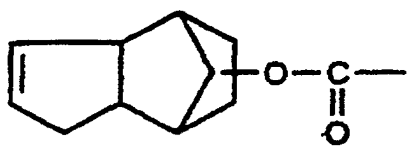

(III)

et l'unité de structure II sous forme de l'unité de structure IV

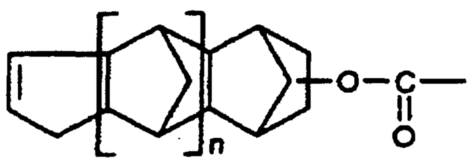

(IV)

dans laquelle l'indice n signifie un nombre entier de 1 à 10.

9. Mélange de liants selon l'une quelconque des revendications 1 à 8, **caractérisé en ce que** dans les polymères (A) et/ou les polyesters (B), l'unité de structure I est incorporée sous forme de l'unité de structure V

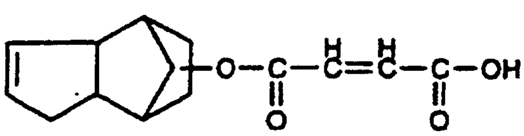

(V)

et l'unité de structure II sous forme des unités de structure VI

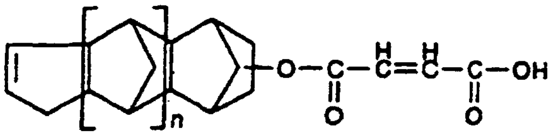

(VI)

dans laquelle l'indice n signifie un nombre entier de 1 à 10.

**10.** Mélange de liants selon l'une quelconque des revendications 1 à 9, **caractérisé en ce que** les composants (A) et (B) y sont contenus en un rapport de quantités de 99,5 : 0,5 à 0,5 : 99,5.

**11.** Utilisation d'un mélange de liants selon l'une quelconque des revendications 1 à 10 pour la réalisation de produits de revêtement durcissables avec un rayonnement actinique et/ou thermodurcissables ou en tant que produits de revêtement durcissables avec un rayonnement actinique et/ou thermodurcissables.

**12.** Produits de revêtement, durcissables avec un rayonnement actinique et/ou thermodurcissables et qui contiennent ou qui sont constitués par des mélanges de liants selon l'une quelconque des revendications 1 à 10.

**13.** Utilisation des produits de revêtement selon la revendication 12 pour le premier laquage de voitures, le laquage de réparation de voitures, le laquage industriel, y compris le laquage de bandes et de conteneurs, le laquage de matériaux synthétiques et le laquage de meubles.

**14.** Procédé pour le revêtement de substrats dans le premier laquage de voitures, le laquage industriel, y compris le laquage de bandes et de conteneurs et le laquage de meubles par application d'un produit de revêtement et durcissement par un rayonnement actinique et/ou par chauffage, **caractérisé en ce qu'**on utilise un produit de revêtement selon la revendication 12.

**15.** Substrats, revêtus à l'aide du procédé selon la revendication 14.